# EUROPEAN PATENT APPLICATION

(11) **EP 2 615 887 A2**
(43) Date of publication of application: **17.07.2013**
(21) Application number: 12197899.3
(22) Date of filing: 18.12.2012
(51) Int. Cl.: H05B 33/08

(54) **Display apparatus and driving method thereof**

(30) Priority: 10.01.2012 KR 20120003182
(71) Applicant: Samsung Electronics Co., Ltd., Gyeonggi-do 443-742 (KR)
(72) Inventor: Cho, Eun-il, Gyeonggi-do (KR); Yi, Kang-hyun, Chungcheongnam-do (KR); Yang, Joon-hyun, Gyeonggi-do (KR)
(74) Representative: Davies, Robert Ean

(57) **Abstract**

A display apparatus and driving method is provided. The display apparatus includes a power supply unit which supplies a DC voltage, a switch unit which is connected to the power supply unit in series and performs a switching operation according to different switching signals, a transformer unit which switches a voltage applied to primary winding to secondary winding according to the switching operation of the switch unit, a synchronous rectifying unit which performs synchronous rectification with respect to the voltage induced to the secondary winding, and an output unit which outputs the rectified DC voltage.

## Description

### CROSS-REFERENCE TO RELATED APPLICATION

This application claims priority from Korean Patent Application No. 10-2012-0003182, filed on January 10, 2012 in the Korean Intellectual Property Office, the disclosure of which is incorporated herein by reference in its entirety.

### BACKGROUND

### 1. Field

Methods and apparatuses consistent with exemplary embodiments relate to a display apparatus and a driving method thereof, and more particularly, to a display apparatus which includes an emissive element, and a driving method.

### 2. Description of the Related Art

In general, an organic light-emitting display apparatus is a display apparatus that uses an organic light-emitting element using luminescence of an organic material, and displays an image by driving N*M organic light-emitting cells arranged in a matrix pattern with a voltage or an electric current. Since the organic light-emitting cells have a diode characteristic, the organic light-emitting cells may be called organic light-emitting diodes (OLEDs) and have a configuration of anode, organic thin film, and cathode electrode layers.

The OLED does not require a backlight unit unlike a liquid crystal display (LCD), and can represent good color, has a wide angle of field larger than 160°, and has a high-speed response time so that it can realize a 3-dimensional (3D) image with a sense of reality.

An OLED panel should be driven at relatively low voltage and high current in comparison with a plasma display panel (PDP) or an LCD panel. Therefore, the OLED panel has several stages of converting power in order to obtain direct current (DC) power of a 12V level. In this case, since a circuit configuration is complicated and efficiency is low, there is a problem of increased power consumption. Accordingly, a new power configuration to maximize power conversion efficiency is required.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a display apparatus which can increase power efficiency using a direct driving power configuration, and a driving method thereof.

According to an aspect of an exemplary embodiment, there is provided a display apparatus, including: a display unit which includes a plurality of pixels, and a voltage driving unit which provides a driving voltage to the plurality of pixels, wherein the driving voltage unit includes: a power factor correction (PFC) unit which compensates for a power factor on an alternating current (AC) input voltage and converts the AC input voltage into a direct current (DC) voltage, a converter unit which converts the converted DC voltage into an output voltage level and includes a synchronous rectifying unit to perform synchronous rectification, and a driving circuit unit which provides the driving voltage using the voltage output from the converter unit.

The converter unit may include: a power supply unit which supplies the converted DC voltage, a switch unit which is connected to the power supply unit in series and performs a switching operation according to different switching signals, a transformer unit which switches a voltage applied to primary winding to secondary winding according to the switching operation of the switch unit, a synchronous rectifying unit which performs synchronous rectification with respect to the voltage induced to the secondary winding, and an output unit which outputs the rectified DC voltage.

The synchronous rectifying unit may include a first synchronous rectifier and a second synchronous rectifier which are connected to the secondary winding of the transformer unit and rectify the voltage induced to the secondary winding.

The the first synchronous rectifier and the second synchronous rectifiers may be realized by metal-oxide semiconductor field effect transistors (MOSFETs).

The plurality of pixels may include an emissive element.

The AC input voltage may be 400V and the driving voltage may be 12V.

According to an aspect of another exemplary embodiment, there is provided a driving method of a display apparatus, the method including: providing a DC voltage, switching the DC voltage applied to primary winding to secondary winding according to a switching operation performed according to different switching signals, performing synchronous rectification with respect to the voltage induced to the secondary winding, and outputting the rectified DC voltage.

A switch unit performing the switching operation may include a first switch and a second switch which are connected to a power supply unit which supplies the DC voltage, and the first switch and the second switch may perform switching operations according to the different switching signals.

A synchronous rectifying unit performing the synchronous rectification may include first synchronous rectifier and a second synchronous rectifier which are connected to the secondary winding and rectify the voltage induced to the secondary winding.

The first and the second synchronous rectifiers may be realized by metal-oxide semiconductor field effect transistors (MOSFETs).

The method may further include storing the voltage which undergoes the synchronous rectification.

The DC voltage provided in the providing the DC voltage may be 400V, and the DC voltage output in the outputting the rectified DC voltage may be 12V.

According to an aspect of another exemplary embodiment, there is provided a driving method of a display apparatus including a display unit which includes a plurality of pixels and a voltage driving unit which provides a driving voltage to the plurality of pixels, wherein the voltage driving unit includes a synchronous rectifying unit to perform synchronous rectification.

The voltage driving unit may further include a power factor correction (PFC) unit which compensates for a power factor on an alternating current (AC) input voltage and converts the AC input voltage into a direct current (DC) voltage, a converter unit which converts the converted DC voltage into an output voltage level and includes the synchronous rectifying unit, and a driving circuit unit which provides the driving voltage using the voltage output from the converter unit.

The converter unit may include a power supply unit which supplies the converted DC voltage, a switch unit which is connected to the power supply unit in series and performs a switching operation according to different switching signals, a transformer unit which switches a voltage applied to primary winding to secondary winding according to the switching operation of the switch unit, a synchronous rectifying unit which performs synchronous rectification with respect to the voltage induced to the secondary winding; and an output unit which outputs the rectified DC voltage.

The synchronous rectifying unit may include a first synchronous rectifier and a second synchronous rectifier which are connected to the secondary winding of the transformer unit and rectify the voltage induced to the secondary winding.

The first synchronous rectifier and the second synchronous rectifier may be realized by metal-oxide-semiconductor field-effect transistors (MOSFETs).

The plurality of pixels may include an emissive element.

The AC input voltage may be 400V and the driving voltage may be 12V.

The voltage driving unit further include a power factor correction (PFC) unit which compensates for a power factor on an alternating current (AC) input voltage and converts the AC input voltage into a direct current (DC) voltage, a plurality of converter units which convert the converted DC voltage into an output voltage level; and a driving circuit unit which provides the driving voltage using the voltage output from the converter unit, wherein the plurality of converter units are connected in parallel, and wherein the plurality of converter units each include a synchronous rectifying unit to perform synchronous rectification.

### BRIEF DESCRIPTION OF THE DRAWING FIGURES

The above and/or other aspects will be more apparent by describing in detail exemplary embodiments, with reference to the accompanying drawings, in which:
FIG. 1 is a view illustrating a display apparatus according to an exemplary embodiment;
FIG. 2A is a view to schematically explain a circuit of a display apparatus according to an exemplary embodiment;
FIG. 2B is a view to explain a circuit of a pixel according to an exemplary embodiment;
FIG. 3A is a block diagram illustrating a voltage driving unit according to an exemplary embodiment;
FIG. 3B is a block diagram to explain a converter according to an exemplary embodiment;
FIG. 3C is a circuit diagram to explain a circuit of a converter according to an exemplary embodiment;
FIG. 4A to 4C are views to explain a method of modularizing a DC/DC converter according to an exemplary embodiment;
FIG. 5 is a graph to compare an effect of a converter according to an exemplary embodiment and an effect of a related art converter; and
FIG. 6 is a flowchart illustrating a driving method of a converter according to an exemplary embodiment.

### DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

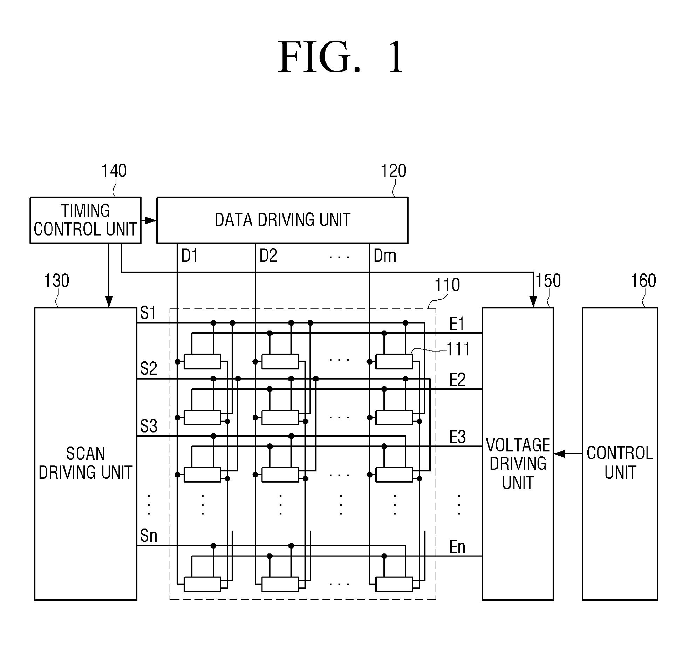

FIG. 1 is a view illustrating a display apparatus according to an exemplary embodiment.

Referring to FIG. 1, a display apparatus according to an exemplary embodiment includes a display unit 110, a data driving unit 120, a scan driving unit 130, a timing control unit 140, a voltage driving unit 150, and a control unit 160. The display apparatus may be realized by an organic light-emitting display apparatus.

A plurality of pixels 111 are arranged on the display unit 110, and each of the pixels 111 may include an emissive element which emits light in response to a flow of a current, an ELVDD which supplies a current to the emissive element, and a driving transistor which controls the current supplied to the emissive element.

The display unit 110 includes n scan lines S1, S2, S3,..., Sn which are arranged in a column direction and transmit scan signals, and m data lines D1, D2, D3, ..., Dm which are arranged in a row direction and transmit data signals.

The display unit 110 receives a first voltage and a second voltage from the voltage driving unit 150 and is driven by the first and the second voltages. The first voltage may be an ELVDD and the second voltage may be an ELVSS. For example, if a current flows in an OLED by scan signals, data signals, driving power (ELVDD) and base power (ELVSS), the display unit 110 emits light in response to an amount of current, thereby displaying an image.

The data driving unit 120, which is a means for generating data signals, receives image signals (R, G, B data) having red, blue, and green components and generates data signals. The data driving unit 120 is connected to the data lines D1, D2,.., Dm of the display unit 110 and applies the generated data signals to the display unit 110.

The scan driving unit 130, which is a means for generating scan signals, is connected to the scan lines S1, S2, S3, ..., Sn and transmits scan signals to a specific row of the display unit 110. The data signal output from the data driving unit 120 is transmitted to the pixel 111 to which the scan signal is transmitted.

The timing control unit 140 may receive an input signal (IS), a horizontal sync signal (Hsync), a vertical sync signal (Vsync), and a main clock signal (MCLK) from external sources, generate an image data signal, a scan control signal, a data control signal, and an emission control signal, and provide the image data signal, the scan control signal, the data control signal, and the emission control signal to the display unit 110, the data driving unit 120, the scan driving unit 130, and the voltage driving unit 140, respectively.

The voltage driving unit 150 generates a driving voltage and transmits the driving voltage to the display unit 110, the data driving unit 120, and the scan driving unit 130. The driving voltage transmitted to the display unit 110 may be the above-described first voltage (ELVDD) and second voltage (ELVSS).

A detailed configuration of the voltage driving unit 150 will be explained in detail below with reference to the drawings.

In the present exemplary embodiment, the control unit 160 is a separate element from the timing control unit 150. However, this is merely an example and the control unit 160 may be realized as a part of the timing control unit 140 according to an exemplary embodiment.

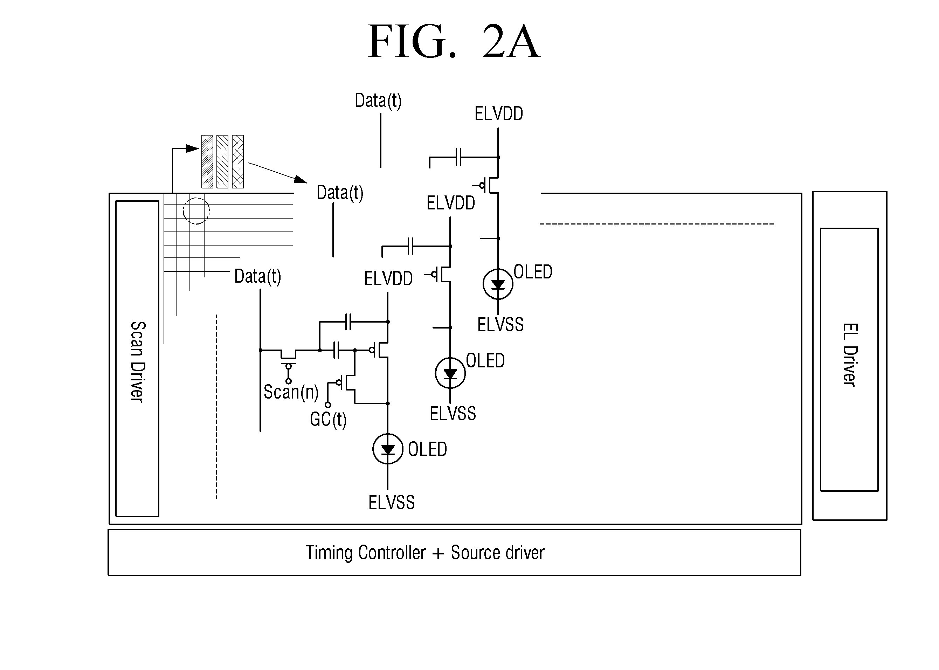

FIG. 2A is a view to schematically explain a circuit of a display apparatus according to an exemplary embodiment.

The display apparatus shown in FIG. 2A may be realized by an active matrix organic light-emitting diode (AM-OLED) panel. The OLED recited herein refers to a display that emits light by itself using a principle of electric field emission if a current flows through a fluorescent or phosphorescent organic material thin film. Also, a passive matrix OLED (PM OLED) is driven by making one line emit light simultaneously, whereas the AM OLED is driven by driving light-emitting elements individually.

As shown in FIG. 2A, a panel of the AM-OLED may include RGB pixel cells including a thin film transistor (TFT) element and an organic electroluminescent (EL) element. The TFT element is driven by a timing controller, a scan driver, and a source driver, and performs a function of recording image information to be displayed.

Active matrix driving is achieved by a TFT in a pixel. Threshold voltage (Vth) compensation and data recording are achieved through an external switch. Also, the external switch is connected to a power source and supplies energy necessary for light emission.

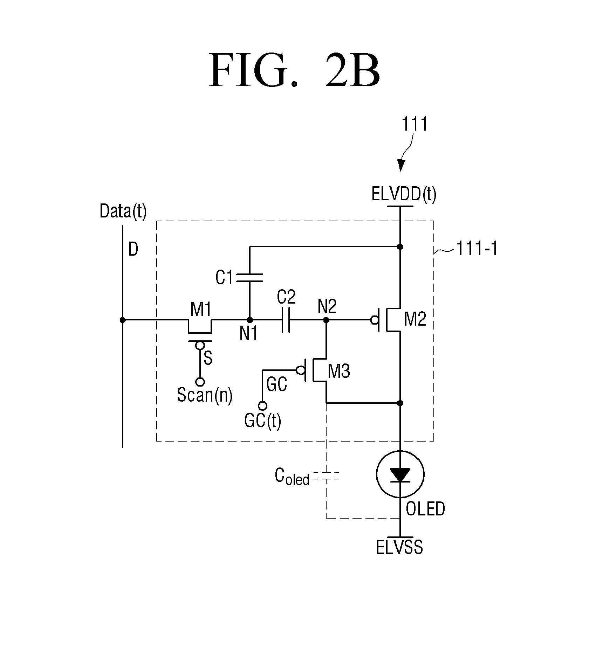

FIG. 2B is a view to explain a circuit of a pixel according to an exemplary embodiment.

Referring to FIG. 2B, the pixel 111 according to an exemplary embodiment includes an OLED and a pixel circuit 111-1 to supply a current to the OLED.

An anode electrode of the OLED is connected to the pixel circuit 111-1 and a cathode electrode of the OLED is connected to second power (ELVSS). The OLED generates light of predetermined brightness in response to the current supplied from the pixel circuit 111-1.

As shown in FIG. 2B, the pixel circuit 111-1 included in each pixel 111 may include three transistors M1 to M3 and two capacitors C1 and C2.

A gate electrode of the first transistor M1 is connected to a scan line S and a first electrode of the first transistor M1 is connected to a data line D. A second electrode of the first transistor M1 is connected to a first node N1.

That is, a scan signal (Scan(n)) is input to the gate electrode of the first transistor M1 and a data signal (Data(t)) is input to the first electrode of the first transistor M1.

A gate electrode of the second transistor M2 is connected to a second node N2, a first electrode of the second transistor M2 is connected to first power (ELVDD(t)), and a second electrode of the second transistor M2 is connected to the anode electrode of the OLED. The second transistor M2 serves as a driving transistor.

The first capacitor C1 is connected between the first node N1 and the first electrode of the second transistor M2, that is, the first power (ELVDD(t)), and the second capacitor C2 is connected between the first node N1 and the second node N2.

A gate electrode of the third transistor M3 is connected to a control line (GC) a first electrode of the third transistor M3 is connected to the gate electrode of the second transistor M2, and a second electrode of the third transistor M3 is connected to the anode electrode of the OLED, that is, the second electrode of the second transistor M2.

Accordingly, a control signal (GC(t)) is input to the gate electrode of the third transistor M3, and, if the third transistor M3 is turned on, the second transistor M2 is connected to the OLED.

The cathode electrode of the OLED is connected to the second power (ELVSS(t)).

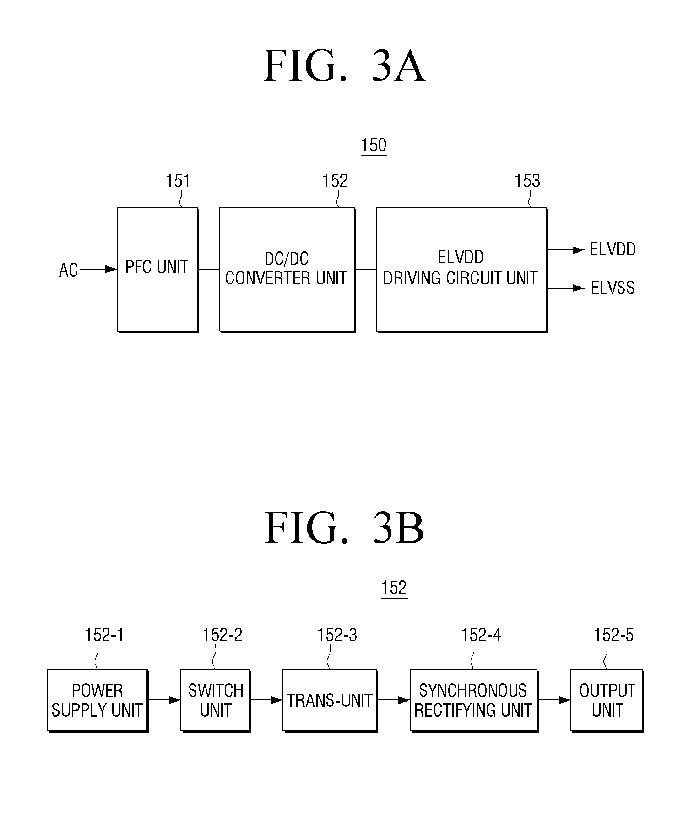

FIG. 3A is a block diagram illustrating a voltage driving unit according to an exemplary embodiment.

Referring to FIG. 3A, the voltage driving unit 150 includes a power factor correction (PFC) unit 151, a converter unit 152, and a driving circuit unit 153.

The PFC unit 151 compensates for a power factor on an alternating current (AC) input voltage (Vin), and converts the AC input voltage (Vin) into a direct current (DC). For example, an AC input voltage of about 90V-264V is converted into a DC voltage of about 400V.

The converter unit 152 converts the DC voltage converted by the PFC unit 151 into an output voltage level.

Specifically, the converter unit 152 converts the voltage of about 400V output from the PFC unit 151 into a voltage of about 12V.

The driving circuit unit 153 drives an ELVDD voltage and an ELVSS voltage using the voltage output from the converter unit 152.

FIG. 3B is a block diagram illustrating a converter according to an exemplary embodiment. The converter shown in FIG. 3B may be realized by the converter unit 152 shown in FIG. 3A.

Referring to FIG. 3B, the converter 152 includes a power supply unit 152-1, a switch unit 152-2, a transformer unit 152-3, a synchronous rectifying unit 152-4, and an output unit 152-5.

The power supply unit 152-1 provides a DC voltage. The DC voltage may be a voltage (Vpfc) output from the PFC unit 151 shown in FIG. 3A.

The switch unit 152-2 is connected to the power supply unit 152-1 in series and performs a switching operation according to different switching signals.

The transformer unit 152-3 switches a voltage applied to primary winding to secondary winding according to the switching operation of the switch unit 152-2.

The synchronous rectifying unit 152-4 performs synchronous rectification with respect to the voltage induced to the secondary winding of the trans-unit 152-3.

The output unit 152-5 outputs the rectified DC voltage.

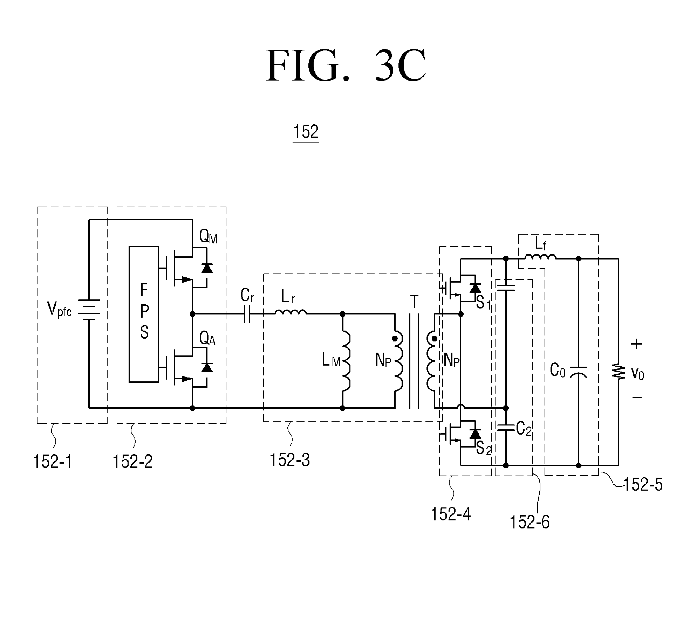

FIG. 3C is a circuit diagram illustrating a circuit of the converter according to an exemplary embodiment.

The power supply unit 152-1 supplies a DC voltage. The DC voltage may be a voltage (Vpfc) output from the PFC unit 151 shown in FIG. 3A.

The switch unit 152-2 is connected to the power supply unit 152-1 in series and performs a switching operation according to different switching signals.

Specifically, the switch unit 152-2 includes first and second switching elements Q_{M} and Q_{A} connected to the power supply unit 152-1. The first and the second switching elements Q_{M} and Q_{A} may perform switching operations according to the different switching signals (for example, from switching unit FPS). In this case, the first and the second switching elements may be ground-connected to the power supply unit 152-1 in series. The different switching signals may be switching signals of different phases.

The transformer unit 152-3 switches the voltage applied to the primary winding to the secondary winding according to the switching operation of the switch unit 152-2.

The transformer unit 152-3 includes a first impedance (L_{M}) connected to a primary coil Np in parallel, a second impedance (Lᵣ) connected to the first impedance (L_{M}) in series, and a first capacitor (Cᵣ) connected to the second impedance (Lᵣ) in series. In this case, LCC resonance may be achieved by the second impedance Lᵣ and the first capacitor Cᵣ.

The synchronous rectifying unit 152-4 performs synchronous rectification with respect to the voltage induced to the secondary winding of the transformer unit 152-3.

The synchronous rectifying unit 152-4 includes first and second synchronous rectifiers S1 and S2 which are connected to the secondary winding of the transformer unit 152-3 and rectify the voltage induced to the secondary winding. The first and the second synchronous rectifiers S1 and S2 may be realized by a metal-oxide semiconductor field effect transistor (MOSFET).

In this case, a control IC (for example, IR11672) monitors a voltage of a drain and a source of the MOSFET, and turns on the MOSFET only if VDS (i.e. the voltage of the drain minus the voltage of the source) is negative, so that the MOSFET serves as a diode. Accordingly, MOSFETS have a low on-resistance (R_{DSON}), higher efficiency than that in a related-art rectifying end can be obtained.

The output unit 152-5 outputs the rectified DC voltage V₀. The output unit 152-5 may be realized by an LC filter which includes a third impedance L_{f} and a second capacitor Cₒ.

The converter 152 may further include a condenser unit 152-6 which is connected between the synchronous rectifying unit 152-4 and the output unit 152-5 and stores the voltage rectified by the synchronous rectifying unit 152-4. The condenser unit 152-6 may be realized by a multilayer ceramic capacitor (MLCC), such as capacitor C₂.

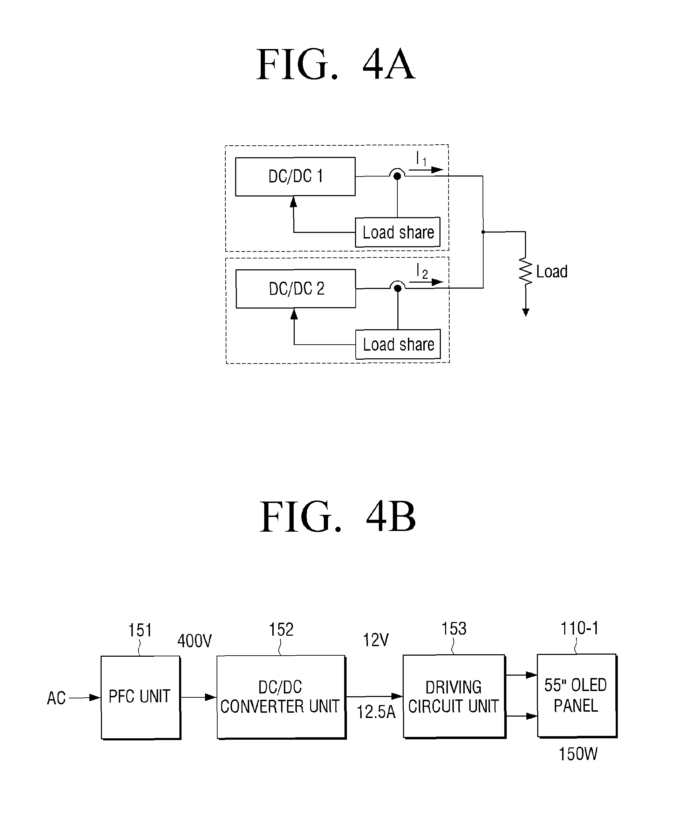

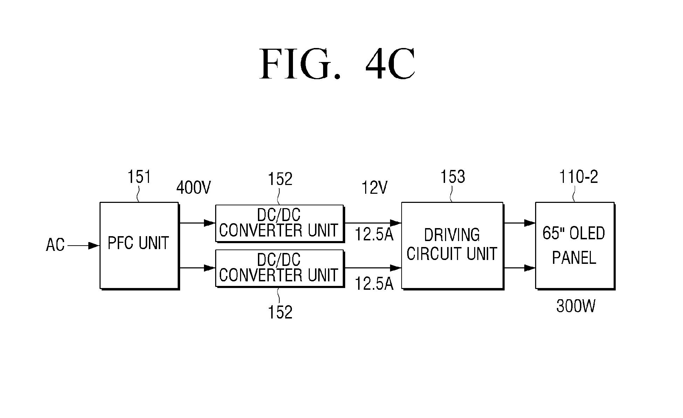

According to an exemplary embodiment, a DC/DC converter may be provided in the form of a module as shown in FIGS. 4A to 4C. That is, a power circuit may be configured by arranging DC/DC converter blocks standardized according to power desired by a load in parallel.

For example, a high efficiency DC/DC converter 152 standardized in a level of 150W is manufactured, and two DC/DC converters 152 may be connected in parallel and driven under a load of 300W, and three DC/DC converter 152 may be connected in parallel and driven under a load of 450W. The level of 150W may be applied to a 55" OLED panel 110-1 and the level of 300W may be applied to a 65" OLED panel 110-2.

Accordingly, an adaptive response can be achieved without developing a separate DC/DC converter. Also, since only a current of modules are added to a fixed voltage and is applied to a load, an operation is stable from the aspect of heat emission or element stress caused by direct driving.

FIG. 4A illustrates an exemplary embodiment where converter DC/DC1 outputting current I₁ is be connected in parallel to converter DC/DC2 outputting current I₂. Any current deviation which may occur between the two or more modules driven in parallel can be compensated for by adding current information to a feedback loop of each module (for example, the "Load Share" as shown in FIG. 4A) using an OP-amp. Known as "the droop method," each power supply receives a feedback voltage. If a large current imbalance develops between individual modules, the feedback voltage decreases allowing other modules to distribute more current.

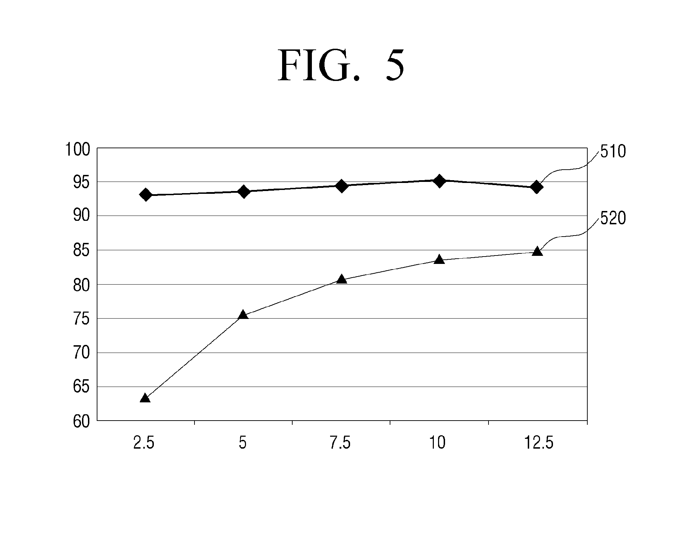

FIG. 5 is a graph to explain an effect of the converter according to an exemplary embodiment in comparison with an effect of a related-art converter.

As shown in FIG. 5, according to a converter (510) which performs one stage power conversion (400V→12V) using a synchronous rectifying end according to an exemplary embodiment can increase efficiency of DC/DC in comparison with a related-art converter 520 which performs two stages power conversion (400V→24V→12V).

Also, an improved power configuration which can increase whole efficiency of the power circuit through a concept of DC/DC modularization and improve heat emission can be suggested.

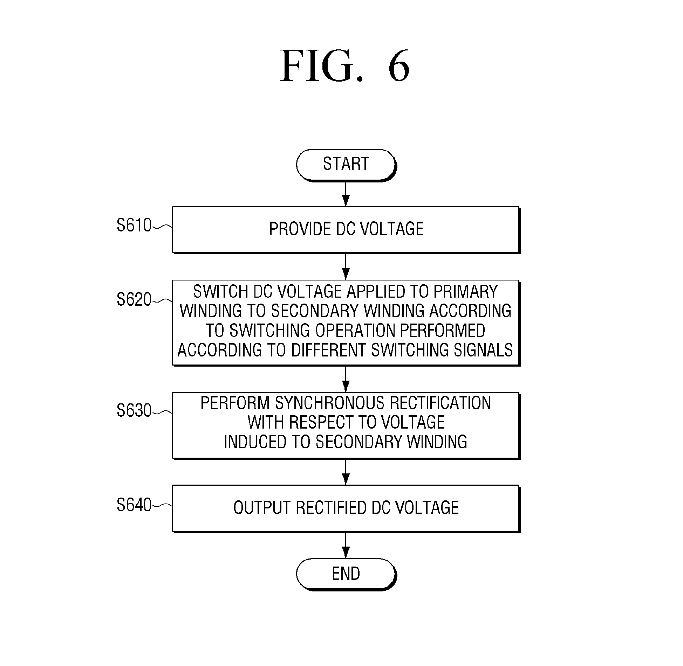

FIG. 6 is a flowchart illustrating a driving method of a converter according to an exemplary embodiment.

According to the driving method of the converter shown in FIG. 6, if a DC voltage is provided (S610), the DC voltage applied to the primary winding is switched to the secondary winding according to a switching operation performed according to different switching signals (S620).

Synchronous rectification is performed with respect to the voltage induced to the secondary winding (S630).

The rectified DC voltage is output (S640).

A switch unit performing a switching operation includes first and second switches connected to a power supply unit for supplying a DC voltage in series, and the first and the second switches perform switching operations according to the different switching signals.

The synchronous rectifying unit for performing synchronous rectification includes first and second synchronous rectifiers which are connected to the secondary winding and rectify the voltage induced to the secondary winding.

The first and the second synchronous rectifiers may be realized by MOSFETs.

The driving method may further include storing the synchronously-rectified voltage.

In this case, the DC voltage provided in operation S610 may be 400V and the DC voltage output in operation S640 may be 12V.

Since the exemplary embodiments have been described, overlapped explanation and illustration are omitted.

A program to perform the method according to the above-described exemplary embodiments may be stored and used in a variety of recording media.

Specifically, a code to perform the above-described methods may be stored in various types of recording media readable by a terminal apparatus, such as a random access memory (RAM), a flash memory, a read only memory (ROM), an erasable programmable ROM (EPROM), an electronically erasable and programmable ROM (EEPROM), a register, a hard disk, a removable disk, a memory card, a USB memory, and a CD-ROM.

Accordingly, since a plurality of contents can be processed in a single signal processing block, a display apparatus can be realized at a low cost.

The foregoing exemplary embodiments and advantages are merely exemplary and are not to be construed as limiting the present disclosure. The exemplary embodiments can be readily applied to other types of apparatuses. Also, the description of the exemplary embodiments is intended to be illustrative, and not to limit the scope of the disclosure, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display unit which comprises a plurality of pixels; and
a voltage driving unit which provides a driving voltage to one of the plurality of pixels,
wherein the voltage driving unit comprises:
a power factor correction (PFC) unit which compensates for a power factor on an alternating current (AC) input voltage and converts the AC input voltage into a direct current (DC) voltage;
a converter unit which converts the converted DC voltage into an output voltage level and comprises a synchronous rectifying unit to perform synchronous rectification; and
a driving circuit unit which provides the driving voltage using the voltage output from the converter unit.

2. The display apparatus as claimed in claim 1, wherein the converter unit comprises:
a power supply unit which supplies the converted DC voltage;
a switch unit which is connected to the power supply unit in series and performs a switching operation according to different switching signals;
a transformer unit which switches a voltage applied to primary winding to secondary winding according to the switching operation of the switch unit;
a synchronous rectifying unit which performs synchronous rectification with respect to the voltage induced to the secondary winding; and
an output unit which outputs the rectified DC voltage.

3. The display apparatus as claimed in claim 2, wherein the synchronous rectifying unit comprises a first synchronous rectifier and a second synchronous rectifier which are connected to the secondary winding of the transformer unit and rectify the voltage induced to the secondary winding.

4. The display apparatus as claimed in claim 3, wherein the first synchronous rectifier and the second synchronous rectifier are realized by metal-oxide semiconductor field-effect transistors (MOSFETs).

5. The display apparatus as claimed in anyone of claims 1 to 4, wherein the plurality of pixels comprise an emissive element.

6. The display apparatus as claimed in anyone of claims 1 to 5, wherein the AC input voltage is 400V and the driving voltage is 12V.

7. A driving method of a display apparatus, the method comprising:
providing a DC voltage;
switching the DC voltage applied to primary winding to secondary winding according to a switching operation performed according to different switching signals;
performing synchronous rectification with respect to the voltage induced to the secondary winding; and
outputting the rectified DC voltage.

8. The method as claimed in claim 7, wherein a switch unit performing the switching operation comprises a first switch and a second switch which are connected to a power supply unit which supplies the DC voltage,
wherein the first switch and the second switch perform switching operations according to the different switching signals.

9. The method as claimed in claim 7, wherein a synchronous rectifying unit performing the synchronous rectification comprises a first synchronous rectifier and a second synchronous rectifier which are connected to the secondary winding and rectify the voltage induced to the secondary winding.

10. The method as claimed in claim 9, wherein the first synchronous rectifier and the second synchronous rectifier are realized by metal-oxide semiconductor field effect transistors (MOSFETs).

11. The method as claimed in anyone of claims 7 to 10, further comprising storing the voltage which undergoes the synchronous rectification.

12. The method as claimed in anyone of claims 7 to 11, wherein the DC voltage provided in the providing the DC voltage is 400V, and the DC voltage output in the outputting the rectified DC voltage is 12V.
